(19) Europäisches Patentamt
European Patent Office
Office européen des brevets

(11) **EP 3 938 262 B1**

(12) **FASCICULE DE BREVET EUROPEEN**

(45) Date de publication et mention de la délivrance du brevet:
**19.07.2023 Bulletin 2023/29**

(21) Numéro de dépôt: **20711530.4**

(22) Date de dépôt: **05.03.2020**

(51) Classification Internationale des Brevets (IPC):
**B60W 30/18** *(2012.01)*    **B60W 30/12** *(2020.01)*
**B60W 60/00** *(2020.01)*

(52) Classification Coopérative des Brevets (CPC):
**B60W 30/18163; B60W 30/12; B60W 30/18154;**
**B60W 60/0015;** B60W 2552/05; B60W 2554/80;
B60W 2556/50; B60W 2556/55

(86) Numéro de dépôt international:
**PCT/EP2020/055896**

(87) Numéro de publication internationale:
**WO 2020/182622 (17.09.2020 Gazette 2020/38)**

(54) **PROCÉDÉ DE SÉLECTION POUR UN VÉHICULE AUTOMOBILE D'UNE VOIE DE CIRCULATION D'UN ROND-POINT**

VERFAHREN ZUR AUSWAHL EINER FAHRSPUR EINES KREISVERKEHRS FÜR EIN KRAFTFAHRZEUG

METHOD FOR SELECTING A TRAFFIC LANE OF A ROUNDABOUT, FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.03.2019 FR 1902637**

(43) Date de publication de la demande:
**19.01.2022 Bulletin 2022/03**

(73) Titulaires:
• **Renault s.a.s**
  **92100 Boulogne Billancourt (FR)**
• **NISSAN MOTOR Co., Ltd.**
  **Yokohama-shi, Kanagawa 221-0023 (JP)**

(72) Inventeurs:
• **DA SILVA, Jorge**
  **93200 SAINT DENIS (FR)**
• **PAPAMICHAIL, Chrysanthi**
  **78600 MAISONS LAFFITTE (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
DE-A1-102015 205 133    KR-A- 20180 135 672
US-A1- 2014 278 052    US-A1- 2018 374 360

**Description**

DOMAINE TECHNIQUE DE L'INVENTION

La présente invention concerne de manière générale le domaine des aides à la conduite de véhicules automobiles, et notamment de véhicules autonomes.

Elle concerne plus particulièrement un procédé de sélection d'une voie de circulation d'un rond-point sur laquelle il est préférable que le véhicule automobile se rende.

ETAT DE LA TECHNIQUE

Lorsqu'un véhicule automobile aborde un rond-point, il est d'usage que ce véhicule emprunte la voie de circulation située le plus à l'extérieur du rond-point lorsqu'il doit sortir rapidement (en circulant sur au plus un quart du rond-point), et qu'il emprunte sinon une voie de circulation située plus à l'intérieur du rond-point.

On cherche alors à automatiser cette sélection de voie de circulation dans le cadre de la programmation d'une unité de calcul d'un véhicule autonome.

Pour cela, on connaît du document US2007/0150182 un système de navigation permettant de guider un conducteur ou un véhicule autonome dans un rond-point afin d'atteindre une sortie optimale par rapport à une destination souhaitée. En particulier, le système de navigation est conçu pour déterminer la voie de circulation permettant d'atteindre cette sortie de la manière la plus efficace possible.

Dans ce document, l'unité de calcul est adaptée à déterminer, sur la base de données de géolocalisation, le nombre de voies de circulation dans le rond-point, le nombre de voies de circulation au niveau de la voie d'entrée dans le rond-point et la présence ou non d'un feu tricolore au niveau de la voie d'entrée dans le rond-point.

L'unité de calcul génère ensuite, à partir de ces données, une commande à destination du conducteur ou du système de navigation autonome du véhicule, portant sur la voie de circulation optimale à emprunter pour rejoindre la sortie désirée.

L'inconvénient majeur de ce système est qu'il ne permet pas à lui seul d'assurer la traversée en toute sécurité du rond-point par le véhicule automobile,

On connaît de DE 102015205133 A1 un procédé de conduite autonome dans un rond-point, et des critères d'optimisation pour la planification du mouvement, en particulier un critère de d'optimisation d'un écoulement de trafic et une minimisation d'un nombre de manoeuvres.

PRESENTATION DE L'INVENTION

Afin de remédier à l'inconvénient précité de l'état de la technique, la présente invention propose une méthode de sélection d'une voie de circulation d'un rond-point tenant compte de la présence de véhicules tiers dans le rond-point, et donc d'éventuels risques de collision avec ces véhicules tiers.

Plus particulièrement, on propose selon l'invention un procédé de sélection d'une voie de circulation d'un rond-point comprenant un nombre L de voies (avec $L \geq 1$). Le procédé comprend des étapes de :

- détection des voies de circulation du rond-point et de véhicules tiers roulant sur lesdites voies de circulation,
- détermination, pour chaque voie de circulation considérée parmi une partie au moins des voies de circulation détectées, d'une première donnée relative à l'occupation de la voie de circulation considérée i (avec $1 \leq i \leq L$) par les véhicules tiers, et d'une seconde donnée relative au nombre de voies de circulation à traverser en cas de changement de voie de circulation depuis une voie de circulation courante j (avec $1 \leq j \leq L$) vers la voie de circulation considérée,
- calcul de la valeur d'une fonction de coût pour chaque voie de circulation considérée, en fonction de la première donnée et de la seconde donnée, et de
- sélection d'une des voies de circulation considérées en fonction de chaque valeur calculée de la fonction de coût.

Ainsi, grâce à l'invention, le choix de la voie de circulation à emprunter dans le rond-point dépend non seulement de la sortie désirée mais également de l'occupation des voies du rond-point par des véhicules tiers et d'un risque de collision avec ces véhicules tiers en cas de changement de voie de circulation. Elle permet donc une conduite sécurisée du véhicule automobile lors de la traversée du rond-point.

D'autres caractéristiques avantageuses et non limitatives du procédé conforme à l'invention, prises individuellement ou selon toutes les combinaisons techniquement possibles, sont les suivantes :

- il est prévu, après l'étape de sélection, une étape de détermination de la possibilité ou du risque pour le véhicule automobile de changer de voie de circulation pour se diriger vers la voie de circulation sélectionnée ;
- étant donnée une voie de circulation voisine de la voie de circulation courante empruntée par le véhicule automobile, à l'étape de détermination de la possibilité ou du risque pour le véhicule automobile de changer de voie de circulation, on contrôle qu'un temps de manoeuvre nécessaire pour que le véhicule automobile effectue un changement de voie afin de parvenir à un endroit souhaité de ladite voie de circulation voisine est strictement inférieur au temps d'arrivée nécessaire pour qu'un véhicule tiers circulant sur ladite voie de circulation voisine arrive à l'endroit souhaité ;
- le véhicule automobile étant équipé d'un moyen de géolocalisation, il est prévu des étapes de détermination d'une sortie désirée parmi une pluralité de sorties du rond-point, et une étape de détection, en fonction de la position géolocalisée du véhicule automobile, d'une sortie courante qui, parmi la pluralité de sorties du rond-point, est celle la plus proche du véhicule automobile, puis ladite étape de sélection est réalisée en fonction de la position de la sortie courante par rapport à la sortie désirée ;

- l'étape de sélection est mise en oeuvre de manière itérative lorsque le véhicule automobile circule dans le rond-point ;

- le véhicule automobile étant équipé d'un moyen de géolocalisation, l'étape de sélection est mise en oeuvre à chaque fois que le véhicule automobile est localisé au niveau d'une sortie du rond-point ;

- il est prévu une étape de détermination d'un nombre de passages du véhicule automobile au niveau d'une sortie désirée du rond-point, ladite étape de sélection étant réalisée en fonction du nombre de passages déterminé ; et

- le véhicule automobile étant équipé d'un moins un capteur de télémétrie, la première donnée comportant un taux d'occupation de chaque voie de circulation considérée par les véhicules tiers, ledit taux d'occupation est obtenu en fonction des mesures effectuées par ledit capteur de télémétrie.

DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] est une vue schématique d'un véhicule automobile adapté à mettre en oeuvre un procédé de sélection conforme à l'invention,

[Fig. 2] est un premier exemple de rond-point dans lequel le procédé de sélection peut être mis en oeuvre,

[Fig. 3] est un deuxième exemple de rond-point dans lequel le procédé de sélection peut être mis en oeuvre,

[Fig. 4] est un troisième exemple de rond-point dans lequel le procédé de sélection peut être mis en oeuvre,

[Fig. 5] est un quatrième exemple de rond-point dans lequel le procédé de sélection peut être mis en oeuvre,

[Fig. 6] est un cinquième exemple de rond-point dans lequel le procédé de sélection peut être mis en oeuvre,

[Fig. 7] est un sixième exemple de rond-point dans lequel le procédé de sélection peut être mis en oeuvre, et

[Fig. 8] représente, sous forme de logigramme, un exemple de procédé conforme à l'invention.

En préliminaire on notera que les éléments identiques ou similaires apparaissant sur les différentes figures seront, dans la mesure du possible, référencés par les mêmes signes de référence et ne seront pas décrits à chaque fois.

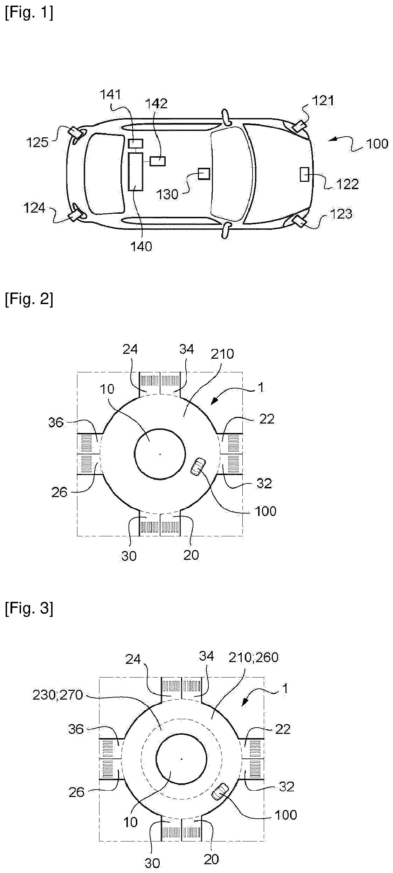

Sur la figure 1, on a représenté un véhicule automobile 100 vu de dessus.

Comme cela apparaît sur cette figure, le véhicule automobile 100 est ici une voiture classique, comportant un châssis qui est supporté par des roues et qui supporte lui-même différents équipements parmi lesquels un groupe motopropulseur, des moyens de freinage, et une unité de direction.

Il pourra s'agir d'un véhicule à pilotage manuel, auquel cas ce dernier sera équipé de moyens d'affichage d'informations à destination du conducteur, ou, préférentiellement, d'un véhicule autonome. C'est d'ailleurs le cas d'un véhicule autonome qui sera ici considéré dans la suite de cet exposé.

Ce véhicule automobile 100 est équipé de capteurs lui permettant de se repérer dans son environnement de façon à pouvoir se piloter de façon autonome, c'est-à-dire sans intervention humaine.

Tout type de capteur pourrait être employé.

Dans l'exemple représenté sur la figure 1, le véhicule automobile 100 est équipé d'une caméra 130 orientée vers l'avant du véhicule afin de capturer des images de l'environnement situé à l'avant du véhicule. Cette caméra 130 est par exemple positionnée au niveau d'une partie centrale haute du pare-brise dans l'habitacle du véhicule automobile 100.

Le véhicule automobile 100 est équipé en outre d'au moins un capteur de télémétrie (RADAR, LIDAR ou SONAR). Il est plus précisément ici équipé de cinq capteurs RADAR 121, 122, 123, 124, 125 situés aux quatre coins du véhicule et en position centrale avant du véhicule.

Le véhicule automobile 100 est équipé aussi d'un système de géolocalisation 141, comprenant par exemple un récepteur GNSS (typiquement un capteur GPS).

Afin de traiter les informations fournies par ces différents composants et d'être en mesure d'élaborer une consigne de pilotage du groupe motopropulseur, des moyens de freinage, et de l'unité de direction, le véhicule automobile 100 est équipé d'un calculateur 140.

Ce calculateur 140 comporte un processeur (CPU), une mémoire interne, des convertisseurs analogiques-numériques, et différentes interfaces d'entrée et/ou de sortie.

Grâce à ses interfaces d'entrée, le calculateur 140 est adapté à recevoir des signaux d'entrée provenant des différents capteurs.

Le calculateur 140 est par ailleurs connecté à une mémoire externe 142 qui stocke une cartographie des routes. On considérera ici qu'il s'agit d'une cartographie détaillée, dans laquelle les caractéristiques des ronds-points (géométrie et/ou nombre de voies de circulation, nombre d'entrées et de sorties, positions de ces entrées et sorties) sont renseignées.

La mémoire interne du calculateur 140 mémorise pour sa part une application informatique, constituée de programmes d'ordinateur comprenant des instructions dont l'exécution par le processeur permet la mise en oeuvre par le calculateur du procédé décrit ci-après.

Enfin, grâce à ses interfaces de sortie, le calculateur 140 est adapté à transmettre des consignes aux différents organes du véhicule.

Sur les figures 2 à 7, on a représenté différents types de ronds-points 1 vus du dessus.

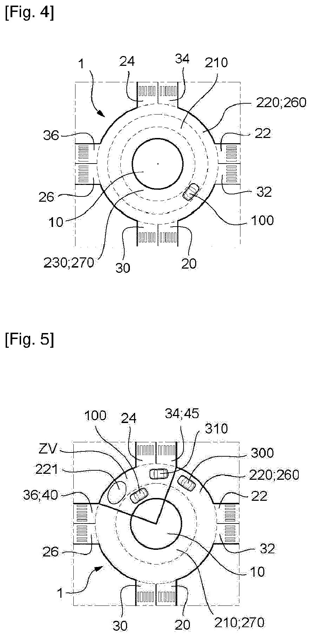

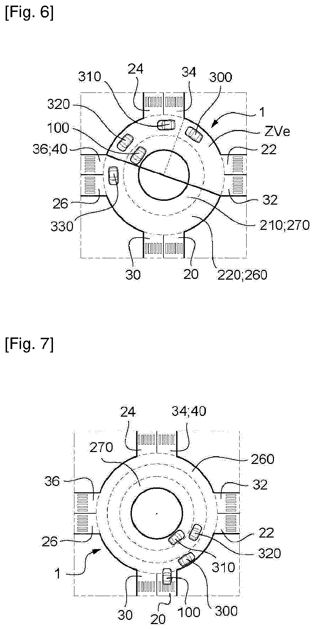

Ces différents ronds-points 1 comportent un nombre L (avec L ≥ 1) spécifique de voies de circulation 210, 220, 230 sur lesquelles des véhicules automobiles peuvent circuler. Dans la suite de cette description, on considérera des ronds-points 1 à une voie de circulation 210 comme sur la figure 2, des ronds-points 1 à deux voies de circulation comme sur les figures 3, 5 et 6, et des ronds-points à plus de deux voies de circulation, comme par exemple à trois voies de circulation (figures 4 et 7).

Comme cela est visible sur les figures, le rond-point 1 comporte ici un ilot central 10 autour duquel les véhicules peuvent tourner pour circuler dans le rond-point.

Les ronds-points comportent également plusieurs entrées 20, 22, 24, 26 et sorties 30, 32, 34, 36.

On considérera ici que chaque rond-point comporte quatre entrées et quatre sorties, réparties en croix. Bien entendu, en variante, la configuration du rond-point pourrait être différente.

Dans la suite de cet exposé, on distinguera :

- la voie de circulation courante 210 empruntée par le véhicule automobile 100 considéré,
- les voies de circulation voisines 220, 230 (dans les cas où le rond-point a un nombre de voies de circulation supérieur ou égal à deux), en distinguant les voies de circulation voisines 220 qui sont adjacentes à droite de la voie de circulation courante 210 et les voies de circulation voisines 230 qui sont adjacentes à gauche de la voie de circulation courante 210.

Pour la suite de cet exposé, on peut aussi introduire la voie de circulation 260 la plus à l'extérieur du rond-point (que le véhicule empruntera notamment pour sortir du rond-point) et la voie de circulation 270 la plus intérieure du rond-point.

Comme le montrent les figures 5 à 7, on considérera ici que des véhicules automobiles autres que le véhicule automobile 100 considéré, ci-après appelés véhicules tiers 300, 310, 320, 330, roulent aussi sur les voies de circulation du rond-point.

Lorsque le véhicule automobile 100 considéré, dont on considère qu'il est ici autonome, aborde un rond-point, il doit choisir l'une des voies de circulation 210, 220, 230 pour entrer dans le rond-point afin de se diriger vers la sortie du rond-point désirée.

Cette sortie de rond-point désirée est par exemple déterminée par un logiciel de navigation, compte tenu du lieu de destination souhaité par les passagers du véhicule automobile 100.

Le calculateur 140 doit donc déterminer quelle voie de circulation le véhicule automobile 100 doit emprunter afin de passer le plus rapidement possible et en toute sécurité le rond-point 1 pour atteindre la sortie désirée.

Pour cela, le calculateur 140 met en oeuvre un procédé comportant plusieurs étapes, qui sont décrites ci-après.

En variante, le procédé pourrait être mis en oeuvre par une infrastructure extérieure au véhicule automobile 100, par exemple par une infrastructure positionnée au centre ou à proximité du rond-point.

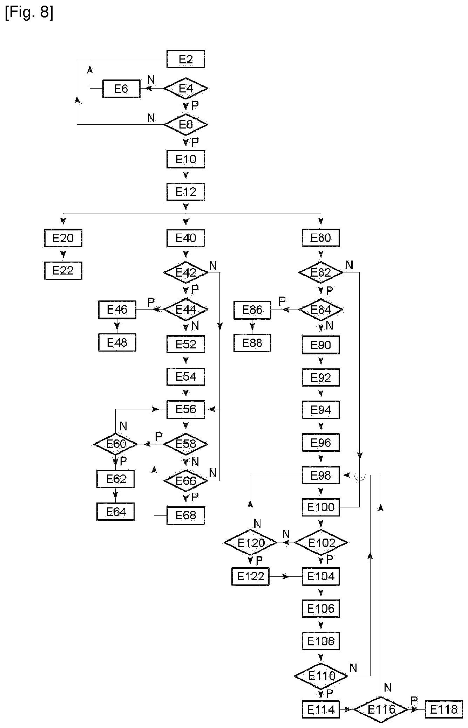

La succession des étapes mises en oeuvre dans le cadre de ce procédé est représentée sur la figure 8 sous forme d'un logigramme.

Préalablement à la mise en oeuvre du procédé, on considère donc que le véhicule automobile 100 se déplace sur une route pour se rendre à un lieu de destination souhaité. En pratique, une suite d'instructions, déterminées par exemple à partir du système de géolocalisation 141, permet le déplacement du véhicule automobile 100 vers la destination souhaitée.

On considérera alors ici que le véhicule automobile 100 aborde le rond-point 1.

Comme le montre la figure 8, le procédé débute lors d'une étape E2 avec l'acquisition en temps réel sur le trajet du véhicule automobile 100 de données mesurées par les différents équipements (capteurs RADAR et caméras) du véhicule automobile 100, concernant son environnement.

L'étape E4 suivante consiste à vérifier que ces données sont exploitables. En effet, il peut arriver, notamment en fonction des conditions météorologiques, que ce ne soit pas le cas.

Pour cette vérification, le calculateur 140 reçoit de chacun des équipements un indice de confiance (s'exprimant ici sous la forme d'un pourcentage de confiance dans la fiabilité de la mesure qu'il effectue), qu'il compare à un seuil prédéterminé.

Si l'indice de confiance n'est pas assez élevé, le procédé ne peut pas donner de consigne de conduite quant à la voie à emprunter pour traverser le rond-point. A l'étape E6, le processus s'interrompt alors. Cette interruption peut se traduire de différentes manières. Par exemple, les moyens d'affichage d'informations à l'attention du conducteur peuvent signifier au conducteur qu'aucune indication de conduite n'est disponible dans le rond-point. En variante, le procédé peut également reprendre à l'étape E2 avec l'acquisition de nouvelles données quelques mètres plus loin (et donc une réévaluation de la situation).

Si l'indice de confiance est assez élevé, le procédé illustré sur la figure 8 se poursuit en une étape E8.

Cette étape E8 consiste à déterminer la géographie des lieux, en particulier pour détecter la présence éventuelle d'un rond-point 1 sur une partie prochaine de son trajet.

Pour cela, le calculateur 140 utilise soit la caméra 130 seule, soit les moyens de géolocalisation 141 couplés à la mémoire externe 142, soit l'ensemble de ces éléments en combinaison.

Plus précisément ici, il acquiert une image capturée par la caméra 130, et la position géolocalisée du véhicule automobile 100. Compte tenu de cette position géolocalisée, le véhicule automobile 100 peut trouver dans la mémoire externe 142 une cartographie de la zone traversée par le véhicule automobile 100 afin de localiser un éventuel rond-point.

Si aucun rond-point n'est détecté prochainement, le procédé reprend à l'étape E2 avec l'acquisition de nouvelles données sur la suite du trajet du véhicule automobile 100.

Si un rond-point est localisé sur une partie prochaine du trajet, le calculateur 140 utilise les caractéristiques sur la géographie des lieux, en particularité pour déterminer le nombre de voies dans le rond-point et les différentes sorties qu'il comprend (étape E10). Le calculateur 140 localise également la sortie désirée 40 que le véhicule automobile 100 devra emprunter pour rejoindre la destination souhaitée (étape E12).

Si le rond-point comprend une seule voie de circulation (comme c'est le cas sur la figure 2), le véhicule doit forcément l'emprunter pour traverser le rond-point 1 (étape E20). Le procédé conduit donc à l'émission de la commande consistant à indiquer que le véhicule automobile 100 doit rouler sur cette voie unique (étape E22).

Si le rond-point comporte deux voies de circulation (figures 3, 5 et 6), le procédé se poursuit à l'étape E40.

Le calculateur 140 utilise la position géolocalisée du véhicule automobile 100 afin de déterminer si celui-ci va entrer ou est déjà entré dans le rond-point (étape E42).

Si le véhicule automobile 100 entre dans le rond-point, le procédé se poursuit avec l'étape E44. Sinon, il se poursuit avec l'étape E56.

Lors de l'étape E44, le calculateur 140 détermine la position de l'entrée par laquelle le véhicule automobile 100 va s'introduire dans le rond-point par rapport à la sortie désirée 40. En d'autres termes, le calculateur 140 détermine si la sortie désirée 40 correspond à la prochaine sortie du rond-point ou si elle est plus éloignée. Pour les exemples des figures 3, 5 et 6, si le véhicule automobile 100 s'introduit dans le rond-point par l'entrée 20, le calculateur 140 détermine si la sortie désirée 40 est la sortie prochaine (la sortie 32) ou l'une des autres sorties (les sorties 34, 36 ou 30).

Si la sortie désirée 40 est la prochaine sortie, le calculateur 140 indique, à l'étape E46, la commande à suivre consistant à emprunter la voie de circulation 260 la plus extérieure du rond-point pour se diriger au plus vite vers la sortie désirée 40. A l'étape E48, le véhicule automobile 100 sort du rond-point par la sortie désirée 40, ici la sortie 32.

Si la sortie désirée 40 n'est pas la prochaine sortie rencontrée par le véhicule automobile 100 dans le rond-point (cas représenté sur les figures 5 et 6), le calculateur 140 indique, à l'étape E52, la consigne consistant à emprunter la voie de circulation 270 la plus intérieure du rond-point. Le véhicule automobile 100 entre donc dans le rond-point en se plaçant sur cette voie de circulation intérieure 270.

Il vérifie toutefois au préalable qu'il peut se placer sur cette voie de circulation intérieure 270 en toute sécurité. Pour cela, il procède de la façon qui sera décrite ci-après, à l'étape E60.

Le véhicule automobile 100 roule ensuite sur cette voie de circulation intérieure 270 (étape E54).

La position géolocalisée du véhicule automobile 100 est actualisée en continu lors du trajet de celui-ci. En particulier, le calculateur 140 détermine régulièrement, à partir de cette position géolocalisée actualisée au niveau de quelle sortie du rond-point le véhicule automobile 100 se trouve par rapport à la sortie désirée 40 (étape E56). En pratique, cette détermination est effectuée de manière itérative. Par exemple, à chaque fois que le véhicule automobile 100 se trouve au niveau d'une sortie de rond-point (nommée « sortie actuelle 45 » ou « sortie courante 45 » dans la suite), le calculateur 140 détermine si la sortie désirée 40 est la sortie suivante du rond-point ou une autre. En variante, la localisation de la sortie désirée 40 est effectuée à intervalles de temps réguliers (prédéterminés).

A partir de cette position géolocalisée actualisée, le calculateur 140 détermine, à l'étape E58, si la prochaine sortie est la sortie désirée 40.

Si c'est le cas, le calculateur 140 indique alors que le véhicule automobile 100 doit se diriger vers la voie de circulation extérieure 260 afin de se rapprocher de la sortie désirée 40. En pratique, comme cela est représenté sur la figure 5, une zone ZV de changement de voie de circulation est alors définie entre la sortie actuelle 45 (précédant la sortie désirée 40) et la sortie désirée 40.

Le calculateur 140 détermine donc, à l'étape E60, s'il est possible pour le véhicule automobile 100 de changer de voie de circulation (donc de se diriger vers la voie de circulation extérieure 260) sans risque sur cette zone ZV.

Pour cela, le calculateur 140 calcule le temps de manoeuvre $t_{EGO}$ qui sera nécessaire au véhicule automobile 100 pour atteindre la voie de circulation extérieure 260 (qu'il souhaite emprunter pour rejoindre la sortie désirée 40) et en quel endroit ce véhicule aboutira après ce changement de voie. Par exemple, le calculateur 140 localise un endroit 221 de la voie de circulation extérieure 260 que le véhicule automobile 100 atteindra s'il change de voie (voir figure 5).

Puis, si l'on se trouve en présence d'un véhicule tiers circulant déjà sur cette voie de circulation extérieure 260, le calculateur 140 calcule le temps d'arrivée $t_{OBJ}$ qui sera nécessaire pour que ce véhicule tiers atteigne cet endroit 221. Sur l'exemple de la figure 5, le calculateur 140 détermine le temps que le véhicule tiers 310 mettra pour rejoindre l'endroit 221.

Selon l'invention, le temps de manoeuvre $t_{EGO}$ et le temps d'arrivée $t_{OBJ}$ sont déterminés par le calculateur 140 à partir par exemple de l'exécution d'un algorithme se basant notamment sur les données mesurées par les différents équipements (capteurs RADAR et caméras) et sur des prévisions cinématiques (par exemple sur la trajectoire) dérivées par le calculateur 140 en fonction de de la destination souhaitée.

Le critère pour déterminer s'il est possible pour le véhicule automobile 100 de changer de voie de circulation consiste alors à vérifier l'inégalité suivante :
$t_{EGO} < \min(t_{OBJ}) + \delta t$, où $\delta t$ est une marge de sécurité prédéterminée et mémorisée dans la mémoire interne du calculateur 140. En variante, cette marge de sécurité peut dépendre, par exemple, de la vitesse instantanée du véhicule automobile 100, des conditions météorologiques ou de la catégorie du véhicule automobile 100 (camion, véhicule léger).

Si cette inégalité est vérifiée (cas de la figure 5), il n'y a aucun risque à changer de voie de circulation et le véhicule automobile 100 se dirige vers la voie de circulation extérieure 260 (étape E62). Lorsqu'il atteint la sortie désirée 40, le véhicule automobile 100 quitte le rond-point en empruntant cette sortie désirée 40 (étape E64).

Si cette inégalité n'est pas vérifiée (ce qui signifie qu'il y aurait un risque à changer de voie comme représenté sur la figure 6 avec la présence du véhicule tiers 330), le véhicule automobile 100 reste sur sa voie de circulation 210, ici la voie de circulation intérieure 270 du rond-point, et le procédé reprend à l'étape E56.

Lorsque le calculateur détecte à l'étape E58 que la prochaine sortie n'est pas la sortie désirée 40, le procédé se poursuit à l'étape E66. Lors de cette étape, le calculateur 140 détermine, à partir des différentes positions géolocalisées du véhicule automobile 100 (et mémorisées dans la mémoire externe 142), le nombre de fois que le véhicule automobile 100 a été localisé au niveau de la sortie désirée 40 sans pour autant pouvoir l'emprunter pour quitter le rond-point. En d'autres termes, le calculateur 140 détermine le nombre de tours de rond-point qu'a déjà dû effectuer le véhicule automobile 100 sans pouvoir en sortir de manière sécurisée.

S'il s'agit du premier tour de rond-point effectué par le véhicule automobile 100, ce dernier continue sur sa voie de circulation (ici la voie de circulation intérieure 270) et le procédé reprend à l'étape E56.

Dans le cas où le véhicule a déjà effectué un nombre k de tours de rond-point supérieur ou égal à 1, le procédé continue à l'étape E68. En pratique, si le véhicule automobile 100 n'a pas pu se diriger vers la sortie désirée 40 lors d'un (ou plusieurs) tour(s) précédent(s) de rond-point, le calculateur 140 cherche à anticiper le changement de voie afin que le véhicule automobile 100 puisse rejoindre la sortie désirée 40 le plus rapidement possible (en s'évitant donc un ou plusieurs autre(s) tour(s) de rond-point supplémentaire(s)). Cela se traduit par une définition d'une zone de changement de voie de circulation plus étendue ZVe.

Ainsi, à l'étape E68, si le véhicule automobile 100 a déjà effectué k tours de rond-point, la zone de changement de voie s'étendra à partir de la (k+1)ième sortie précédant la sortie désirée 40 (plus précisément entre la (k+1)ième sortie précédant la sortie désirée 40 et la sortie désirée 40). Dans le cas où k est égal au nombre de sorties que contient le rond-point, le calculateur 140 pilotera l'unité de direction du véhicule automobile 100 de façon à ce que le véhicule automobile 100 passe immédiatement de la voie de circulation courante 210 à la voie de circulation désirée, ici à la voie de circulation extérieure 260.

Par exemple, dans le cas où le véhicule automobile 100 a déjà effectué un tour de rond-point (k = 1), la zone de changement de voie s'étendra entre l'avant-dernière sortie avant la sortie désirée 40 et la sortie désirée 40. Cette zone de changement de voie étendue ZVe est par exemple représentée sur la figure 6.

Le procédé se poursuit ensuite à l'étape E60 afin de vérifier que le véhicule automobile 100 peut effectivement changer de voie de circulation sans risque (il n'est pas prévu que le véhicule automobile 100 change de voie de circulation sans un nouveau contrôle préalable).

Comme cela est représenté sur la figure 8, si à l'étape E42, le calculateur 140 détermine, à partir de la position géolocalisée, que le véhicule automobile 100 est déjà dans rond-point, le procédé se poursuit directement à l'étape E56. Les étapes E56 à E68 s'effectuent alors de la manière décrite précédemment.

On peut maintenant décrire le cas dans lequel le rond-point comporte plus de deux voies de circulation, par exemple ici trois voies comme représenté sur les figures 4 et 7. Dans ce cas, le procédé se poursuit à l'étape E80 (étape correspondant à l'identification d'un rond-point à plus de deux voies de circulation).

Le calculateur 140 utilise la position géolocalisée du véhicule automobile 100 afin de déterminer si celui-ci va entrer ou est déjà entré dans le rond-point (étape E82).

Les étapes E82 à E88 sont respectivement identiques aux étapes E42 à E48 introduites précédemment et ne sont pas décrites à nouveau ici.

Si, lors de l'étape E82, le calculateur 140 détermine que la sortie désirée 40 n'est pas la prochaine sortie rencontrée par le véhicule automobile 100 dans le rond-point, le calculateur 140 détermine, à l'étape E90, sur quelle voie de circulation le véhicule automobile 100 va pouvoir s'engager (pour ensuite traverser le rond-point).

Pour cela, à l'étape E90, le calculateur 140 évalue le taux d'occupation des différentes voies de circulation du rond-point (sauf pour la voie de circulation extérieure 260 qui est uniquement utilisée pour que le véhicule automobile 100 sorte du rond-point). Le calculateur 140 utilise les données mesurées par les différents équipements du véhicule automobile 100 (en particulier des capteurs RADAR et caméras) en les combinant avec par exemple un algorithme de fusion de données tel qu'un filtre de Kalman.

En particulier, à partir des données mesurées, le calculateur 140 identifie les différents véhicules tiers circulant sur le rond-point. A partir de cette identification, le calculateur 140 détermine une première donnée $p_i$ relative à l'occupation de la voie de circulation i considérée (avec $1 \leq i \leq L$) par les véhicules tiers y circulant. En pratique, cette première donnée $p_i$ correspond au pourcentage d'occupation $p_i$ de chaque voie de circulation i.

Ce pourcentage d'occupation $p_i$ est calculé selon la formule suivante :

$p_i = S_{veh} / Si$, avec $S_{veh}$ la surface occupée par des véhicules tiers sur la voie de circulation i et Si la surface totale de la voie.

En pratique, chaque véhicule tiers est modélisé par un rectangle défini à partir de quatre points formant ce rectangle. L'aire de chaque rectangle (et donc le véhicule tiers correspondant) est assignée à la voie de circulation qui comprend ces quatre points formant ce rectangle.

Dans le cas où les quatre points appartiennent à la même voie, l'intégralité de la surface du véhicule tiers correspondant contribue au calcul du pourcentage d'occupation de la voie de circulation i considérée.

Dans le cas où un véhicule tiers est à cheval sur deux voies de circulation, la surface du rectangle associé comporte alors deux portions, déterminées en considérant la ligne de séparation des voies comme un polynôme. Chacune des deux portions de la surface du rectangle est alors respectivement associée à une voie de circulation.

Lors de l'étape E92, le calculateur 140 détermine un critère d'identification de la voie d'entrée dans le rond-point 1 en cherchant à minimiser le pourcentage d'occupation $p_i$ calculé pour chaque voie de circulation i considérée du rond-point parmi les voies de circulation les plus intérieures du rond-point 1.

A l'étape E94, le calculateur 140 détermine alors la voie de circulation intérieure la moins chargée, c'est-à-dire correspondant au pourcentage d'occupation $p_i$ le plus faible.

A l'issue de l'étape E94, le calculateur 140 a identifié la voie de circulation que le véhicule automobile 100 doit emprunter pour entrer dans le rond-point en toute sécurité. Le véhicule automobile 100 se dirige donc vers cette voie de circulation à l'étape E96.

Le véhicule automobile 100 roule ensuite sur cette voie de circulation sélectionnée (étape E98).

La position géolocalisée du véhicule automobile 100 est actualisée en continu lors du trajet de celui-ci. Comme introduit précédemment, le calculateur 140 détermine régulièrement, à partir de cette position géolocalisée actualisée au niveau de quelle sortie du rond-point le véhicule automobile 100 se trouve par rapport à la sortie désirée 40 (ici à l'étape E100 qui est similaire à l'étape E56 précédemment décrite).

A partir de la position géolocalisée actualisée, le calculateur 140 détermine, à l'étape E102, si la prochaine sortie est la sortie désirée 40.

Si c'est le cas, le calculateur 140 détermine (étape E104), pour les voies de circulation plus extérieures à la voie de circulation courante, la première donnée selon la méthode énoncée à l'étape E90.

Lors de cette étape E104, le calculateur 140 détermine également une seconde donnée $R_{j->i}$ relative à une favorisation artificielle des voies de circulation les plus extérieures de manière à faciliter la sélection de ces voies les plus extérieures (pour faciliter la sortie du rond-point 1 du véhicule automobile 100). Cette seconde donnée $R_{j->i}$ correspond à une donnée de pondération liée au taux d'occupation de chaque voie de circulation i cible pouvant être sélectionnée de manière à faciliter la sortie du rond-point 1 du véhicule automobile 100 (qui est actuellement sur la voie de circulation courante j avec $1 \leq j \leq L$). Cette seconde donnée $R_{j->i}$ permet donc de ne pas favoriser le déplacement du véhicule automobile 100 vers une voie de circulation encombrée (afin d'éviter que le véhicule automobile 100 ne reste bloqué à l'intérieur du rond-point 1). En d'autres termes, cette seconde donnée $R_{j->i}$ est déterminée de manière à privilégier les déplacements du véhicule automobile 100 vers les voies de circulation extérieures à la voie de circulation courante j (et en particulier vers la voie de circulation extérieure 260) afin de faciliter sa sortie du rond-point 1. En pratique, la seconde donnée $R_{j->i}$ est relative au nombre de voies de circulation à traverser pour rejoindre la voie de circulation i cible.

Cette seconde donnée s'exprime ici par la formule suivante :

[Math. 1]

$$R_{j \to i} = \sum_{j=1}^{n(i)} \frac{1}{n(j)-1}, n(j) \neq 1$$

avec n(j) un nombre associé à la voie de circulation actuelle j (par définition, pour la voie de circulation la plus extérieure on a n(j)=1, et pour la voie de circulation la plus intérieure on a n(j)=L, L étant le nombre de voies de circulation dans le rond-point), et

n(i) le nombre associé à une voie de circulation ciblée i (ici celle qui est testée).

En pratique, la seconde donnée $R_{j->i}$ sera plus petite pour la voie de circulation extérieure 260 et de plus en plus élevée pour les voies de circulation de plus en plus intérieures. Par exemple, la seconde donnée $R_{j->i}$ sera plus élevée pour le déplacement du véhicule automobile entre la voie de circulation intérieure 230 et la voie de circulation centrale que pour le déplacement du véhicule automobile entre la voie de circulation intérieure 230 et la voie de circulation extérieure 260 (afin de favoriser le déplacement du véhicule automobile 100 vers la voie de circulation extérieure afin que celui-ci puisse quitter le rond-point 1 sans y rester bloqué).

Le calculateur 140 utilise ensuite ces deux données à l'étape E106 pour le calcul d'une fonction de coût $J_{j \to i}$ associée à chaque voie de circulation i. Cette fonction de coût évaluer le coût pour passer de la voie de circulation courante j du véhicule automobile 100 à la voie de circulation i cible. La fonction de coût est par exemple déterminée expérimentalement.

Cette fonction de coût s'exprime ici selon la formule :

[Math. 2]

$$ J_{j \to i} = 1 - \frac{T_{L,i} + R_{j \to i}}{2} $$

avec $T_L$, i un paramètre relatif au niveau de trafic moyen entre la voie de circulation courante j du véhicule automobile 100 et la voie de circulation cible i, calculé à partir du pourcentage d'occupation $p_l$ de chaque voie de circulation l, l étant défini de manière à vérifier l'inégalité i ≤ l ≤ j, $T_L$, i étant défini comme la somme des pourcentages d'occupation $p_l$ avec i ≤ l ≤ j et $R_{j \to i}$ la seconde donnée telle que définie précédemment.

A l'issue de l'étape E106, les fonctions de coût $J_{j \to i}$ pour chacune des voies de circulation i accessibles au véhicule automobile 100 sont calculées. Le calculateur 140 détermine la voie de circulation associée à la plus grande fonction de coût $J_{j \to i}$ (étape E108). En d'autres termes, le calculateur 140 identifie la voie de circulation à emprunter par le véhicule automobile 100 en maximisant la fonction de coût $J_{j \to i}$.

Ainsi, par maximisation de la fonction de coût, le calculateur 140 détermine la meilleure voie de circulation que le véhicule automobile 100 doit emprunter pour se diriger vers la sortie désirée 40 (étape E108). Il faut noter à ce stade que la voie de circulation sélectionnée par maximisation de la fonction de coût n'est pas forcément la voie de circulation la plus extérieure du rond-point. Elle correspond à la voie de circulation la plus extérieure à la voie de circulation courante que le véhicule automobile 100 pourra rejoindre en toute sécurité.

Toutefois, avant de s'y diriger, le calculateur 140 détermine s'il est possible pour le véhicule automobile 100 de changer de voie de circulation (donc de se diriger vers la voie de circulation sélectionnée à partir de la maximisation de la fonction de coût à l'étape E108).

Pour cela, le calculateur 140 calcule, à l'étape E110, le temps de manoeuvre $t_{EGO}$ selon la définition introduite précédemment.

Si le critère de sécurité caractérisé par l'inégalité $t_{EGO} < \min(t_{OBJ}) + \delta t$ n'est pas vérifié (ce qui signifie qu'il y aurait un risque à changer de voie), le véhicule automobile 100 reste sur sa voie de circulation 210, et le procédé reprend à l'étape E98.

Si le critère de sécurité est vérifié, il n'y a aucun risque à changer de voie de circulation et le véhicule automobile 100 se dirige vers la voie de circulation sélectionnée (étape E114).

Pour autant, comme il n'est pas certain qu'à ce stade la voie de circulation sélectionnée soit la voie de circulation extérieure du rond-point, et qui permette donc au véhicule automobile d'emprunter la sortie désirée 40. A partir des données de géolocalisation, le calculateur 140 détermine donc si la voie de circulation sélectionnée est la voie de circulation extérieure du rond-point (étape E116).

Si c'est le cas, lorsqu'il atteint la sortie désirée 40, le véhicule automobile 100 quitte le rond-point en empruntant cette sortie désirée 40 (étape E118).

En revanche, si la voie de circulation sélectionnée n'est pas la voie de circulation extérieure, le véhicule automobile 100 continue sur sa voie de circulation courante et le procédé reprend à l'étape E98.

Lorsque le calculateur 140 détecte, à l'étape E102, que la prochaine sortie n'est pas la sortie désirée 40, le procédé se poursuit à l'étape E120. Lors de cette étape similaire à l'étape E66 précédemment décrite, le calculateur 140 détermine, à partir des différentes positions géolocalisées du véhicule automobile 100 (et mémorisées dans la mémoire 142), le nombre de fois que le véhicule automobile 100 a été localisé au niveau de la sortie désirée 40 sans pour autant pouvoir l'emprunter pour quitter le rond-point. En d'autres termes, le calculateur 140 détermine le nombre de tours de rond-point qu'a déjà dû effectuer le véhicule automobile 100 sans pouvoir en sortir de manière sécurisée.

S'il s'agit du premier tour de rond-point effectué par le véhicule automobile 100, ce dernier continue sur sa voie de circulation et le procédé reprend à l'étape E98.

Dans le cas où le véhicule a déjà effectué un nombre k de tours de rond-point, le procédé continue à l'étape E122 lors de laquelle le calculateur 140 va chercher à anticiper le changement de voie afin que le véhicule automobile 100 puisse rejoindre la sortie désirée 40 le plus rapidement possible (en s'évitant donc un ou plusieurs autre(s) tour(s) de rond-point). Cette étape est similaire à l'étape E68 décrite précédemment.

Le procédé se poursuit ensuite à l'étape E104 avec la détermination d'une voie de circulation plus extérieure à la voie actuelle avec le calcul de la fonction de coût (il n'est pas prévu de changement de voie de circulation sans sélection de la meilleure voie de circulation vers laquelle le véhicule automobile 100 pourra se diriger en toute sécurité).

La présente invention n'est nullement limitée au mode de réalisation décrit et représenté, mais l'homme du métier saura y apporter toute variante conforme à l'invention revendiquée par les revendications annexées.

En particulier, la façon de guider le véhicule pour traverser un rond-point comprenant trois voies de circulation pourrait être appliquée pour guider le véhicule à la traversée d'un rond-point comprenant deux voies de circulation.

## Revendications

1. Procédé de sélection, pour un véhicule automobile (100) circulant dans un rond-point (1), d'une voie de circulation dudit rond-point (1) qui comprend un nombre (L) de voies de circulation (210, 220, 230), le procédé comprenant une étape de :

   - détection des voies de circulation (210, 220, 230) du rond-point et de véhicules tiers (300, 310, 320, 330) roulant sur lesdites voies de circulation (210, 220, 230), le procédé étant **caractérisé en ce qu'**il comprend en outre des étapes de :
   - détermination, pour chaque voie de circulation (210, 220, 230) considérée parmi une partie au moins des voies de circulation (210, 220, 230) détectées, d'une première donnée ($p_i$) relative à l'occupation de la voie de circulation (210, 220, 230) considérée (i) par les véhicules tiers (300, 310, 320, 330), et d'une seconde donnée ($R_{j->i}$) relative au nombre de voies de circulation à traverser en cas de changement de voie de circulation depuis une voie de circulation courante (j) vers la voie de circulation considérée (i),
   - calcul de la valeur d'une fonction de coût ($J_{j->i}$) pour chaque voie de circulation (210, 220, 230) considérée (i), en fonction de la première donnée ($p_i$) et de la seconde donnée ($R_{j->i}$), et de
   - sélection d'une des voies de circulation (210, 220, 230) considérées en fonction de chaque valeur calculée de la fonction de coût ($J_{j->i}$).

2. Procédé de sélection selon la revendication 1, comprenant, après l'étape de sélection, une étape de détermination de la possibilité ou du risque pour le véhicule automobile (100) de changer de voie de circulation (210, 220, 230) pour se diriger vers la voie de circulation (210, 220, 230) sélectionnée.

3. Procédé de sélection selon la revendication 2, dans lequel, étant donnée une autre voie de circulation (210, 220, 230) que la voie de circulation (210, 220, 230) courante empruntée par le véhicule automobile (100), à l'étape de détermination de la possibilité ou du risque pour le véhicule automobile (100) de changer de voie de circulation, on contrôle qu'un temps de manoeuvre nécessaire pour que le véhicule automobile (100) effectue un changement de voie afin de parvenir à un endroit souhaité de ladite autre voie de circulation est strictement inférieur au temps d'arrivée nécessaire pour qu'un véhicule tiers (300, 310, 320, 330) circulant sur ladite autre voie de circulation arrive à l'endroit souhaité.

4. Procédé de sélection selon l'une quelconque des revendications 1 à 3, dans lequel, le véhicule automobile (100) étant équipé d'un moyen de géolocalisation (141), sont incluses des étapes :

   - de détermination d'une sortie désirée parmi une pluralité de sorties (30, 32, 34, 36) du rond-point (1), et
   - de détection, en fonction de la position géolocalisée du véhicule automobile (100), d'une sortie courante qui, parmi la pluralité de sorties (30, 32, 34, 36) du rond-point (1), est celle la plus proche du véhicule automobile (100),

   et dans lequel ladite étape de sélection est réalisée en fonction de la position de la sortie courante par rapport à la sortie désirée.

5. Procédé de sélection selon l'une quelconque des revendications 1 à 4, dans lequel l'étape de sélection est mise en oeuvre de manière itérative lorsque le véhicule automobile (100) circule dans le rond-point (1).

6. Procédé de sélection selon l'une quelconque des revendications 1 à 4, dans lequel le véhicule automobile (100) étant équipé d'un moyen de géolocalisation (141), l'étape de sélection est mise en oeuvre à chaque fois que le véhicule automobile (100) est localisé au niveau d'une sortie (30, 32, 34, 36) du rond-point (1).

7. Procédé de sélection selon la revendication précédente, dans lequel est incluse une étape de détermination d'un nombre de passages du véhicule automobile (100) au niveau d'une sortie désirée du rond-point (1), ladite étape de sélection étant réalisée en fonction du nombre de passages déterminé.

8. Procédé de sélection selon l'une quelconque des revendications 1 à 7, dans lequel, le véhicule automobile (100) étant équipé d'un moins un capteur de télémétrie (121, 122, 123, 124, 125), la première donnée ($p_i$) comportant un taux d'occupation de chaque voie de circulation (i) considérée par les véhicules tiers, ledit taux d'occupation est obtenu en fonction des mesures effectuées par ledit capteur de télémétrie.

## Patentansprüche

1. Verfahren zur Auswahl, für ein in einem Kreisverkehr (1) fahrendes Kraftfahrzeug (100), einer Fahrspur des Kreisverkehrs (1), der eine Anzahl (L) von Fahrspuren (210, 220, 230) enthält, wobei das Verfahren einen Schritt enthält der:

- Erkennung der Fahrspuren (210, 220, 230) des Kreisverkehrs und von auf den Fahrspuren (210, 220, 230) fahrenden Drittfahrzeugen (300, 310, 320, 330),

wobei das Verfahren **dadurch gekennzeichnet ist, dass** es außerdem folgende Schritte enthält:

- Bestimmung, für jede unter mindestens einem Teil der erkannten Fahrspuren (210, 220, 230) betrachtete Fahrspur (210, 220, 230), eines ersten Datenwerts ($p_i$) bezüglich der Belegung der betrachteten (i) Fahrspur (210, 220, 230) durch die Drittfahrzeuge (300, 310, 320, 330) und eines zweiten Datenwerts ($R_{j->i}$) bezüglich der Anzahl von bei einem Fahrspurwechsel von einer aktuellen Fahrspur (j) zur betrachteten Fahrspur (i) zu überquerenden Fahrspuren,
- Berechnung des Werts einer Kostenfunktion ($J_{j->i}$) für jede betrachtete (i) Fahrspur (210, 220, 230) abhängig vom ersten Datenwert ($p_i$) und vom zweiten Datenwert ($R_{j->i}$), und
- Auswahl einer der betrachteten Fahrspuren (210, 220, 230) abhängig von jedem berechneten Wert der Kostenfunktion ($J_{j->i}$).

2. Auswahlverfahren nach Anspruch 1, das nach dem Auswahlschritt einen Schritt der Bestimmung der Möglichkeit oder der Gefahr des Wechsels der Fahrspur (210, 220, 230) für das Kraftfahrzeug (100) enthält, um sich zur ausgewählten Fahrspur (210, 220, 230) zu bewegen.

3. Auswahlverfahren nach Anspruch 2, wobei, angesichts einer anderen Fahrspur (210, 220, 230) als die aktuell vom Kraftfahrzeug (100) befahrene Fahrspur (210, 220, 230), im Schritt der Bestimmung der Möglichkeit oder der Gefahr des Fahrspurwechsels für das Kraftfahrzeug (100) kontrolliert wird, dass eine Manövrierzeit, die notwendig ist, damit das Kraftfahrzeug (100) einen Fahrspurwechsel ausführt, um zu einer gewünschten Stelle der anderen Fahrspur zu gelangen, strikt geringer ist als die notwendige Ankunftszeit, damit ein auf der anderen Fahrspur fahrendes Drittfahrzeug (300, 310, 320, 330) an der gewünschten Stelle ankommt.

4. Auswahlverfahren nach einem der Ansprüche 1 bis 3, in dem, da das Kraftfahrzeug (100) mit einer Geolokalisierungseinrichtung (141) ausgestattet ist, die folgenden Schritte enthalten sind:

- Bestimmung einer gewünschten Ausfahrt unter einer Vielzahl von Ausfahrten (30, 32, 34, 36) des Kreisverkehrs (1), und
- Erkennung, abhängig von der geolokalisierten Position des Kraftfahrzeugs (100), einer aktuellen Ausfahrt, die unter der Vielzahl von Ausfahrten (30, 32, 34, 36) des Kreisverkehrs (1) dem Kraftfahrzeug (100) am nächsten ist,

und wobei der Auswahlschritt abhängig von der Position der aktuellen Ausfahrt bezüglich der gewünschten Ausfahrt durchgeführt wird.

5. Auswahlverfahren nach einem der Ansprüche 1 bis 4, wobei der Auswahlschritt iterativ durchgeführt wird, wenn das Kraftfahrzeug (100) im Kreisverkehr (1) fährt.

6. Auswahlverfahren nach einem der Ansprüche 1 bis 4, wobei, da das Kraftfahrzeug (100) mit einer Geolokalisierungseinrichtung (141) ausgestattet ist, der Auswahlschritt jedes Mal durchgeführt wird, wenn das Kraftfahrzeug (100) im Bereich einer Ausfahrt (30, 32, 34, 36) des Kreisverkehrs (1) lokalisiert wird.

7. Auswahlverfahren nach dem vorhergehenden Anspruch, das einen Schritt der Bestimmung einer Anzahl von Durchgängen des Kraftfahrzeugs (100) im Bereich einer gewünschten Ausfahrt des Kreisverkehrs (1) enthält, wobei der Auswahlschritt abhängig von der bestimmten Anzahl von Durchgängen durchgeführt wird.

8. Auswahlverfahren nach einem der Ansprüche 1 bis 7, wobei, da das Kraftfahrzeug (100) mit mindestens einem telemetrischen Sensor (121, 122, 123, 124, 125) ausgestattet ist, wobei der erste Datenwert ($p_i$) ein Belegungsverhältnis jeder betrachteten Fahrspur (i) durch die Drittfahrzeuge enthält, das Belegungsverhältnis abhängig von den vom telemetrischen Sensor ausgeführten Messungen erhalten wird.

## Claims

1. Method for selecting, for a motor vehicle (100) traveling on a roundabout (1), a traffic lane of said roundabout (1) that comprises a number (L) of traffic lanes (210, 220, 230), the method comprising a step of:

- detecting the traffic lanes (210, 220, 230) of the roundabout and other vehicles (300, 310, 320, 330) driving on said traffic lanes (210, 220, 230),

the method being **characterized in that** it also comprises steps of:

- determining, for each traffic lane (210, 220, 230) under consideration from among at least some of the detected traffic lanes (210, 220, 230), a first item of data ($p_i$) relating to the oc-

cupancy of the traffic lane (210, 220, 230) under consideration (i) by the other vehicles (300, 310, 320, 330), and a second item of data ($R_{j->i}$) relating to the number of traffic lanes to be crossed in the event of changing traffic lane from a current traffic lane (j) to the traffic lane under consideration (i),
- calculating the value of a cost function ($J_{j->i}$) for each traffic lane (210, 220, 230) under consideration (i), on the basis of the first item of data ($p_i$) and of the second item of data ($R_{j->i}$), and
- selecting one of the traffic lanes (210, 220, 230) under consideration on the basis of each calculated value of the cost function ($J_{j->i}$).

2. Selection method according to Claim 1, comprising, after the selection step, a step of determining the possibility or the risk for the motor vehicle (100) to change traffic lane (210, 220, 230) in order to move toward the selected traffic lane (210, 220, 230).

3. Selection method according to Claim 2, wherein, given a traffic lane (210, 220, 230) other than the current traffic lane (210, 220, 230) being taken by the motor vehicle (100), in the step of determining the possibility or the risk for the motor vehicle (100) to change traffic lane, it is checked that a maneuvering time necessary for the motor vehicle (100) to change lane in order to reach a desired location from said other traffic lane is strictly less than the arrival time necessary for another vehicle (300, 310, 320, 330) traveling on said other traffic lane to arrive at the desired location.

4. Selection method according to any one of Claims 1 to 3, wherein, with the motor vehicle (100) being equipped with a geolocation means (141), the following steps are included:

   - determining a desired exit from among a plurality of exits (30, 32, 34, 36) of the roundabout (1), and
   - detecting, on the basis of the geolocated position of the motor vehicle (100), a current exit that, from among the plurality of exits (30, 32, 34, 36) of the roundabout (1), is the one closest to the motor vehicle (100),

   and wherein said selection step is performed on the basis of the position of the current exit with respect to the desired exit.

5. Selection method according to any one of Claims 1 to 4, wherein the selection step is implemented iteratively when the motor vehicle (100) is traveling on the roundabout (1).

6. Selection method according to any one of Claims 1 to 4, wherein, with the motor vehicle (100) being equipped with a geolocation means (141), the selection step is implemented each time the motor vehicle (100) is located at an exit (30, 32, 34, 36) of the roundabout (1) .

7. Selection method according to the preceding claim, wherein there is included a step of determining a number of times the motor vehicle (100) passes a desired exit of the roundabout (1), said selection step being performed on the basis of the determined number of passes.

8. Selection method according to any one of Claims 1 to 7, wherein, with the motor vehicle (100) being equipped with at least one telemetry sensor (121, 122, 123, 124, 125), with the first item of data ($p_i$) comprising an occupancy level of each traffic lane (i) under consideration by the other vehicles, said occupancy level is obtained on the basis of the measurements performed by said telemetry sensor.

[Fig. 1]

[Fig. 2]

[Fig. 3]

[Fig. 4]

[Fig. 5]

[Fig. 6]

[Fig. 7]

EP 3 938 262 B1

[Fig. 8]

**EP 3 938 262 B1**

## RÉFÉRENCES CITÉES DANS LA DESCRIPTION

**Documents brevets cités dans la description**

- US 20070150182 A
- DE 102015205133 A1